# EUROPÄISCHE PATENTSCHRIFT

(11) **EP 3 493 300 B1**
(45) Veröffentlichungstag und Bekanntmachung des Hinweises auf die Patenterteilung: **14.10.2020**
(21) Anmeldenummer: 17001963.2
(22) Anmeldetag: 30.11.2017
(51) Int. Cl.: H01M 4/04, H01M 4/139

(54) **VERFAHREN ZUR AUFBRINGUNG VON POLYMERPATCHES AUF EIN SUBSTRAT**
METHOD FOR APPLYING POLYMER PATCHES ON A SUBSTRATE
PROCÉDÉ D'APPLICATION D'UN PATCH DE POLYMÈRE À UN SUBSTRAT

(43) Veröffentlichungstag der Anmeldung: 05.06.2019
(73) Patentinhaber: Collin Lab & Pilot Solutions GmbH, 83558 Maitenbeth (DE)
(72) Erfinder: Kastner, Friedrich, 4710 Grieskirchen (AT); Grajewski, Franz, 83512 Wasserburg (DE)
(74) Vertreter: Lindermayer, Ludwig Sebastian

(56) Entgegenhaltungen:
- US-A- 3 993 508
- US-A- 4 614 026
- US-B1- 6 409 867

## Beschreibung

Die Erfindung betrifft ein Verfahren zur registergenauen Aufbringung von Polymerpatches auf ein Substrat.

Bei der Herstellung von Lithium-Polymer Batterien oder Lithium-Polymer Akkus wird ein polymeres Elektrodenmaterial entweder vollflächig oder in Bahnen auf ein Trägersubstrat beschichtet öder extrudiert. Für eine Beschichtung wird lösungsmittelbasiertes Material verwendet, für eine extrudierte Schicht werden Polymerschmelzen verwendet.,
Als Trägersubstrate für das polymere Elektrodenmaterial werden im Allgemeinen Aluminium oder Kupferfolien verwendet.

Notwendige Abtrennungen der Bereiche mit polymerem Elektrodenmaterial quer zur Bahn werden dabei entweder durch Stanzen oder mittels Laserabtragung erzeugt. Dies erfordert einen zusätzlichen Arbeitsschritt.

In einem weiteren bekannten Verfahren werden eine oder mehrere Düsen, die die Längsbahnen definieren mit Verschlusseinrichtungen ausgerüstet die einen intermittierenden Materialstrom erlauben und so Polymerfelder direkt auf der Substratoberfläche erzeugen. Nachteil dieses Verfahrens ist aber, dass der Schmelzeabriss durch den Verschlussmechanismus (Shuttter) in der Länge und durch Effekte wie "Neck In" in der Breite nicht genau definiert werden können, und dadurch keine exakt begrenzten und schon gar nicht in Form oder Oberfläche strukturierte Felder erzeugt werden können.

Aufgabe der Erfindung war es, ein Verfahren zur Aufbringung von Patches, insbesondere aus polymeren Elektrodenmaterial bereitzustellen bei dem die Nachteile des Standes der Technik beseitigt werden.

Gegenstand der Erfindung ist daher ein Verfahren zur Aufbringung von Polymerpatches, insbesondere aus polymerem Elektrodenmaterial, auf ein Trägersubstrat, gekennzeichnet durch folgende Verfahrensschritte:
a) Plastifizieren des polymeren Elektrodenmaterial zu einer Schmelze
b) Zuführen des plastifizierten polymeren Elektrodenmaterials über mindestens eine Düse zu einer beheizten strukturierten Walze oder zu einem beheizten strukturierten Förderband, wobei die Walze bzw. das Förderband Vertiefungen aufweist, die der Form und den Abmessungen der aufzubringenden Patches entsprechen,
c) Aufbringen des plastifizierten polymeren Elektrodenmaterial auf ein Trägersubstrat durch In-Kontakt-bringen der Walze bzw. des Förderbandes mit einem Trägersubstrat

Bevorzugt wird die Aufbringung des polymeren Elektrodenmaterials mittels einer Walze, also in einem rotativen Verfahren durchgeführt.

Durch dieses Verfahren können also genau definierte Polymerfelder auf eine Oberfläche appliziert werden. Diese Felder können auch registergenau auf bereits vorhandene Strukturen in fast beliebiger Form und Strukturierung appliziert werden. Ein zusätzlicher Arbeitsschritt, wie Ausstanzen oder Laserbatragung ist nicht mehr erforderlich. Außerdem sind die auf diese Weise erzeugten Polymerpatches exakt in ihrer Form begrenzt. Es können durch dieses Verfarhren auch in der Oberfläche strukturierte und exakt geformte Patches erzeugt werden.

Dabei wird in einem ersten Verfahrensschritt mittels eines Extruders, beispielsweise eines Ein- Zwei- oder Mehrschneckenextruders, einer Schmelzepumpe, eines Kolbenspeichers und dergleichen das polymere Elektrodenmaterials auf übliche bekannte Weise plastifiziert. Das polymere Elektrodenmaterial kann auch in mehreren Schritten, gegebenenfalls auch unter Verwendung von Kombinationen dieser Vorrichtungen, plastifiziert werden.

Je nach Anforderungen werden dabei ein einzelnes Polymermaterial oder mehrere unterschiedliche Polymermaterialien plastifiziert und gegebenenfalls gemischt.

Je nach Anwendung kommen dabei verschiedene Polymere wie Polyolefine (PP, PE, HDPE, LDPE, LLDPE), PA, PET, PEN, PEI, PPS, PPSUund dergleichen zum Einsatz. Die Eigenschaften dieser Materilaien könne gezielt beeinflusst werde, wie beispielsweise durch Füllstoffe wie C (Graphit, Graphen) oder leitfähige Fasern oder Partikel aus Metallen, Legierungen oder intrinsisch leitfähigen Polymeren, wie Polyanilien, PDOT (Polyetherdioxythhiophen). Diese Zusätze beeinflussen die Leitfähigkeit der Polymere.
Speziell bei Batterien wird durch diese Zusätze die Elektronegativität beeinflusst, wobei die Polymerpatches hier direkt als Anode oder Kathode wirken können. Weiters sind auch Kombinationen der Materialien und/oder Additive sowohl in einer Lage als auch als Kombinationen in mehrerer unterschiedlichen Lagen denkbar.

Das plastifizierte Elektrodenmaterial wird anschließend über eine oder mehrere Düsen zur einer Walze oder einem Förderband transportiert.

Dabei können sowohl Mono- als auch Mehrschichtsysteme, also Monodüsen oder Düsen mit vorgeschaltetem Feedblock oder Multi Manifold verwendet werden. Diese Systeme können auch in Kombinationen zum Einsatz kommen.

Der Materialstrom kann dabei kontinuierlich gefördert werden oder aber auch über variable Fördersysteme weitergeleitet werden, beispielsweise durch Variieren der Drehzahl des Extruders oder der Schmelzepumpe, Schmelzeventile oder von Shuttermechanismen und dergleichen moduliert werden.

Die Schmelze wird nun über eine oder mehrere nebeneinander angeordnete Düsen auf eine Walze oder ein Förderband aufgebracht.

Die Walze oder das Förderband ist dabei in Längs- und/oder Querrichtung strukturiert und weist Strukturen, insbesondere Vertiefungen auf, die das spätere Polymerpatch in Negativform darstellen. Die Vertiefungen entsprechen daher in Form und Abmessungen der Form der aufzubringenden Polymerpatches
Diese Strukturen können beispielsweise je nach gewünschter Eigenschaft des Patches glatte oder strukturierte Oberflächen aufweisen, und können galvanisch, mittels Laser, erodiert, geprägt, graviert, geätzt oder in einem beliebigen anderen Verfahren hergestellt sein.
Durch geeignete Verfahren wie Galvanik, Sputtern, bedampfen, CVD oder PVD oder Sprühproszesse kann die Oberflächenenergie der Walze und der Vertiefungen gezielt beeinflusst werden um Haftung oder Ablösung des Polymers einzustellen

Zur Aufrechterhaltung der ausreichenden Fließfähigkeit der Schmelze wird die Walze bzw. das Förderband temperiert bzw. beheizt. Dies kann beispielsweise elektrisch, beispielsweise durch Induktion oder durch eine Widerstandsheizung, oder über Wärmeträgermedien wie Wasser oder Thermoöl oder über Strahlung (z.B. Infrarot) erfolgen.

Die Strukturen der Walze können direkt in die Walzenoberfläche oder in vorher, beispielsweise durch galvanische Verfahren oder durch Sprühen auf die Walzenoberfläche aufgebrachte Schichten eingebracht werden. Typischerweise werden dazu die aus der Drucktechnik zur Herstellung von Druckwalzen oder Druckplatten bekannten Verfahren, wie Gravieren, Ätzen, direktes Lasern oder Elektronenstrahlabtragung, oder Auswaschverfahren verwendet um diese Strukturen herzustellen.

Vorteilhafterweise weist die Walze oder das Förderband zumindest im Bereich der Vertiefungen, die die Form und Abmessungen der Polymerpatches definieren eine Oberflächenbeschichtung auf, die im anschließend Verfahrensschritt des Aufbringens der Polymerpatches auf ein Trägersubstrat das Ablösen der Polymerpatches aus der Walze gezielt beeinflusst.

Je nach Walzenmaterial (Metalle, Legierungen, Polymere, Keramik) können dabei unterschiedliche Oberflächenbeschichtungen oder Kombinationen daraus verwendet werden.
Ferner ist möglich, die Walze bzw. das Förderband vor oder in Abständen der Schmelze Applikation mit einem Trennmittel zu beschichten um das gezielte Ablösen der polymeren Patches gezielt zu ermöglichen.

Wichtig ist auch die Temperatursteuerung der Walze um einerseits die Patches soweit abzukühlen, dass sie eine ausreichende Festigkeit haben um sicher in den Vertiefungen festzuliegen zu bewahren und trotzdem noch nach der Aufbringung auf dem Trägersubstrat verankern.

Gegebenenfalls können die Polymerpatches auch durch eine Mehrschicht- oder Koexapplikation aufgebracht werden, wobei beispielsweise mehrere dünne Schichten registergenau übereinander aufgebracht werden um die entsprechenden Abmessungen zu erreichen.

Um sicherzustellen, dass die Polymerschmelze nur Vertiefungen der Walze vorhanden ist, wird die überschüssige Schmelze durch eine Rakel das ebenfalls temperiert ist, abgezogen werden. Im einfachsten Fall ist die Rakel hier ähnlich wie im Tiefdruck eine Art Klinge, die fest oder oszillierend und in einstellbaren Winkeln über den Zylinder gleitet. Das überschüssige, außerhalb der Vertiefungen auf der Walze bzw. dem Förderband vorhandene Material wird so entfernt.
Möglich ist auch eine rotierende Abquetschwalze, wie bei zwei oder Mehrwalzen Auftragswerken oder ein Rakelband, das quer über die Patchwalze gezogen wird. In diesem Fall wird das Rakelband auch aus einem Speicher über den Zylinder geführt und die Schmelze überschüssige abtransportiert. Weiters kann auch eine quer zur Patchwalze angebrachte Reinigungsschnecke verwendet werden. Diese Systeme können einzeln oder auch in Kombinationen verwendet werden.

Das überschüssige Material kann entweder nach dem Erstarren oder direkt als Schmelze wieder in den Extruder rückgeführt werden.
Außerdem kann auch die Düse bzw. können die Düsen mit dem Rakelmechanismus kombiniert sein um ein gezieltes Einbringen in die Vertiefungen der Walze bzw. des Förderbandes zu gewährleisten.

Unterhalb der Walze bzw. des Förderbandes läuft das zu beschichtende Substrat über eine ebenfalls temperierte Walze (Trägerwalze) und wird durch diese in Kontakt mit der strukturierten Walze bzw. dem strukturierten Förderband gebracht.
Die Trägerwalze führt in Abhängigkeit vom verwendeten Polymermaterial, der Beschaffenheit des Trägersubstrats und der Dimension der Polymerpatches in einem definierten Winkel mit einer definierten Temperatur und einem definierten Anpressdruck das Trägersubstrat an die strukturierte Walze bzw. das strukturierte Förderband heran. Gegebenenfalls kann das Trägersubstrat über Wärmestrahlung oder Kontaktwalzen oder Konvektion vorbeheizt werden.

Es können über geeignete bekannte Registersteuerungen mehrere Schichten registergenau über- oder nebeneinander appliziert werden.

Gegebenenfalls kann das Trägersubstrat über geeignete Vorbehandlungsschritte wie Plasma-, Flamm- oder Coronaverfahren, oder durch Aufbringen eines Primers so behandelt werden, dass die Patches leicht aus den Vertiefungen der Walze oder des Förderbandes herausgelöst werden können und sicher auf dem Trägersubstrat verankern.

Für besondere Anwendungen können die die Form und Abmessungen des Polymerpatches definierenden Vertiefungen der Walze bzw. des Förderbandes mit Makro- oder Mikrostrukturen versehen werden. Unter Makrostrukturen versteht man Strukturen einer Größe (lateral und vertikal) von mindestens 1 mm, Mikrostrukturen weisen eine Größe von weniger als 1mm bis etwa 0,01 mmauf.

Derartige Makro- oder Mikrostrukturen dienen der Erzielung spezifischer Eigenschaften und/oder zur Verbesserung der Aufnahme des Elektrolyten in Polymerbatterien oder Polymerakkus.

Die Qualität der Strukturen wird von den Temperaturen, der Abkühlung, der Entformung (Beschichtung) und dem Druck der Walzen beeinflusst:
In einem besonderen Verfahren wird die Walze von einem von außen oder innen gelagertem Induktionsheizfeld im Bereich des Polymerauftrags sektional beheizt und lokal so beheizt, dass die Oberfläche der die Strukturen bildenden Bereiche vor dem Einbringen des Polymermaterials auf eine deutlich höhere Temperatur gebracht werden, als die Grundtemperatur der Walze, die für das Kühlen des Materials zur Entformung erforderlich ist.

Diese Temperaturerhöhung hat den Vorteil, dass die Viskosität der Schmelze beim Auftreffen auf die zu strukturierende Oberfläche nicht gesenkt wird und ein Eindringen der Schmelze in die Struktur möglich wird.
Am Ende des Bereiches der Eintragung des Werkstoffes wird die Induktionsheizung durch die Steuerung abgeschaltet, so dass die für die Entformung notwendige Temperatur über die Grundtemperatur der Walze erreicht wird.

Beim äußeren Aufbringen des Induktionsfeldes kann dies durch die Parameter Länge des zu druckenden Bereiches, Liniengeschwindigkeit und Leistung gesteuert werden.
Bei einem im Inneren der Walze angeordnetem Induktionsfeld ist zusätzlich die Berücksichtigung der Position, der für die Erzeugung des Feldes notwendigen Spulen erforderlich.

## Patentansprüche

1. Verfahren zur Aufbringung von Polymerpatches, insbesondere aus polymerem Elektrodenmaterial, auf ein Trägersubstrat, **gekennzeichnet durch** folgende Verfahrensschritte:
a) Plastifizieren des polymeren Elektrodenmaterial zu einer Schmelze
b) Zuführen des plastifizierten polymeren Elektrodenmaterials über mindestens eine Düse zu einer beheizten strukturierten Walze oder zu einem beheizten strukturierten Förderband, wobei die Walze bzw. das Förderband Vertiefungen aufweist, die der Form und den Abmessungen der aufzubringenden Patches entsprechen,
c) Aufbringen des plastifizierten polymeren Elektrodenmaterial auf ein Trägersubstrat durch In-Kontakt-bringen der Walze bzw. des Förderbandes mit einem Trägersubstrat

2. Verfahren nach Anspruch 1, **dadurch gekennzeichnet, dass** das Elektrodenmaterial mittels eines Extruders, einer Schmelzepumpe und/oder eines Kolbenspeichers in einem oder mehreren Schritten plastifiziert wird

3. Verfahren nach einem der Ansprüche 1 oder 2, **dadurch gekennzeichnet, dass** überschüssiges polymeres Elektrodenmaterial durch eine Rakel, ein Rakelband oder eine Abquetschwalze von der Walze bzw. dem Förderband entfernt wird.

4. Verfahren nach einem der Ansprüche 1 bis 3, **dadurch gekennzeichnet, dass** die Vertiefungen zusätzlich Mikro-oder Makrostrukturen aufweisen.

5. Verfahren nach einem der Ansprüche 1 bis 4, **dadurch gekennzeichnet, dass** die Vertiefungen und die Mikro- und/oder Makrostrukturen mittels eines Gravur-, Ätz- oder Laserverfahrens erzeugt sind.

6. Verfahren nach einem der Ansprüche 1 bis 5, **dadurch gekennzeichnet, dass** die Walze bzw. das Förderband beheizt ist.

7. Verfahren nach einem der Ansprüche 1 bis 6, **dadurch gekennzeichnet, dass** die Walze bzw. das Förderband eine Oberflächenbeschichtung aufweisen.

8. Verfahren nach einem der Ansprüche 1 bis 7, **dadurch gekennzeichnet, dass** das Trägersubstrat über eine Trägerwalze in einem definierten Winkel, bei einer definierten Temperatur und unter einem definierten Anpressdruck mit der Walze bzw. dem Förderband in Kontakt gebracht wird.

## Claims

1. A method for applying polymer patches, in particular from polymer electrode material, on a carrier substrate, **characterized by** the following method steps:
a) plasticizing the polymer electrode material to form a melt,
b) feeding the plasticized polymer electrode material via at least one die to a heated, structured roller or to a heated, structured conveyor belt, wherein the roller and/or the conveyor belt have recesses that correspond to the dimensions of the patches to be applied,
c) applying the plasticized polymer electrode material on a carrier substrate by bringing the roller and/or the conveyor belt in contact with a carrier substrate.

2. The method according to claim 1, **characterized in that** the electrode material is plasticized in one or multiple steps by means of an extruder, a melt pump and/or a piston accumulator.

3. The method according to one of claims 1 or 2, **characterized in that** the excess polymer electrode material is removed from the roller and/or the conveyor belt by means of a doctor blade, a doctor blade belt or a squeeze roll.

4. The method according to one of claims 1 to 3, **characterized in that** the recesses additionally have micro or macro structures.

5. The method according to one of claims 1 to 4, **characterized in that** the recesses and the micro and/or macro structures are created by means of an engraving, etching or laser method.

6. The method according to one of claims 1 to 5, **characterized in that** the roller and/or the conveyor belt is heated.

7. The method according to one of claims 1 to 6, **characterized in that** the roller and/or the conveyor belt have a surface coating.

8. The method according to one of claims 1 to 7, **characterized in that** the carrier substrate is brought into contact with the roller and/or the conveyor belt via a carrier roller at a defined angle, at a defined temperature and under a defined contact pressure.

## Revendications

1. Procédé d'application de patchs polymères, en particulier en matériau d'électrode polymère, sur un substrat porteur, **caractérisé par** les étapes de procédé suivantes :
a) plastification du matériau d'électrode polymère en une masse fondue,
b) amenée du matériau d'électrode polymère plastifié, par le biais d'au moins une buse, à un cylindre structuré chauffé ou à une bande transporteuse structurée chauffée, le cylindre ou respectivement la bande transporteuse comportant des creux qui correspondent à la forme et aux dimensions du patch à appliquer,
c) application du matériau d'électrode polymère plastifié sur un substrat porteur par la mise en contact du cylindre ou respectivement de la bande transporteuse avec un substrat porteur.

2. Procédé selon la revendication 1, **caractérisé en ce que** le matériau d'électrode est plastifié en une ou plusieurs étapes au moyen d'une extrudeuse, d'une pompe à produit fondu et/ou d'un accumulateur à piston.

3. Procédé selon l'une des revendications 1 ou 2, **caractérisé en ce que** le matériau d'électrode polymère en excès est enlevé du cylindre ou respectivement de la bande transporteuse par un racloir, un ruban de raclage ou un cylindre d'écrasement.

4. Procédé selon l'une des revendications 1 à 3, **caractérisé en ce que** les creux comportent en plus des microstructures ou des macrostructures.

5. Procédé selon l'une des revendications 1 à 4, **caractérisé en ce que** les creux et les microstructures et/ou macrostructures sont produits au moyen d'un procédé de gravure, de décapage ou laser.

6. Procédé selon l'une des revendications 1 à 5, **caractérisé en ce que** le cylindre ou respectivement la bande transporteuse est chauffé(e).

7. Procédé selon l'une des revendications 1 à 6, **caractérisé en ce que** le cylindre ou respectivement la bande transporteuse comportent un revêtement de surface.

8. Procédé selon l'une des revendications 1 à 7, **caractérisé en ce que** le substrat porteur est mis en contact avec le cylindre ou respectivement la bande transporteuse par le biais d'un cylindre porteur selon un angle défini, à une température définie et sous une pression de contact définie.
